(19) Europäisches Patentamt
European Patent Office
Office européen des brevets

(11) **EP 2 825 384 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(21) Anmeldenummer: **13715886.1**

(22) Anmeldetag: **12.03.2013**

(51) Int Cl.:
**B41J 2/045** (2006.01)    **B29C 67/00** (2006.01)

(86) Internationale Anmeldenummer:
**PCT/EP2013/000717**

(87) Internationale Veröffentlichungsnummer:
**WO 2013/135367 (19.09.2013 Gazette 2013/38)**

(54) **VERFAHREN ZUR AUSBRINGUNG EINES VOLUMENSTROMS**

METHOD FOR DISPENSING A VOLUME FLOW

PROCÉDÉ POUR PRODUIRE UN DÉBIT VOLUMÉTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2012 DE 102012004988**

(43) Veröffentlichungstag der Anmeldung:
**21.01.2015 Patentblatt 2015/04**

(73) Patentinhaber: **Arburg GmbH + Co KG**
**72290 Lossburg (DE)**

(72) Erfinder:
• **KRAIBÜHLER, Herbert**
**72290 Lossburg (DE)**
• **DUFFNER, Eberhard**
**72181 Starzach (DE)**
• **KESSLING, Oliver**
**72290 Lossburg-Lembach (DE)**

(74) Vertreter: **Reinhardt, Harry**
**RPK Patentanwälte**
**Reinhardt, Pohlmann und Kaufmann**
**Partnerschaft mbB**
**Grünstraße 1**
**75172 Pforzheim (DE)**

(56) Entgegenhaltungen:
**EP-A1- 2 266 782        WO-A1-03/041875**
**WO-A2-2004/062890      US-A- 5 002 475**
**US-A1- 2007 211 128**

**Beschreibung**

Die Erfindung betrifft ein Verfahren zur Ausbringung eines Volumenstroms aus aufeinander folgenden Tropfen zur Herstellung eines dreidimensionalen Gegenstandes nach dem Oberbegriff des Anspruchs ,1.

Aus der EP 2 266 782 A1 ist ein dem Oberbegriff des Anspruches 1 zugrunde liegendes Verfahren anhand der dort offenbarten Vorrichtung zu entnehmen, bei dem mit einer aus dem Stand der Technik bekannten Spritzgießeinheit verfestigbares Material in einer fluiden Phase in einen Materialspeicher eingebracht wird. Der Materialspeicher steht unter Druck, wobei der Druck dazu dient, das Material tropfenförmig aus einer taktbaren Austrittsöffnung zum Aufbau eines dreidimensionalen Gegenstandes in einem Bauraum auszubringen. Die fluide Phase des Materials besitzt dabei eine Temperatur abhängige Viskosität. Die Ausbringung an der Austrittsöffnung erfolgt über ein Festkörpergelenk, dessen Vorspannung geregelt werden kann. Dazu wird der Betriebspunkt des Festkörpergelenks gemessen und bedarfsweise nachgeregelt. Gezielt können mit dem Betätigungselement Weg-/Kraftkurven am Festkörpergelenk gefahren werden, um dadurch gezielt und bewusst die Form der Tropfen zu beeinflussen.

Ein derartiges Verfahren ist auch aus der DE 10 2004 025 374 A1 bekannt, bei dem Tropfen einer Reaktionskomponente ausgetragen und mit einer auf einem Substrat aufgebrachten Basisreaktionskomponente in Kontakt gebracht werden, um dadurch schichtweise einen dreidimensionalen Artikel mit wechselnden Materialeigenschaften aufzubauen. Dabei ergibt sich ein Artikelabschnitt, in dem ein gradueller Übergang von einer Materialeigenschaft zu einer anderen Materialeigenschaft erfolgt. In Abhängigkeit einer gemessenen Schichtdicke kann bedarfsweise die Tropfengröße geregelt werden, ohne dass auf die sich eventuell während des Herstellungsvorgangs sich ändernde Viskosität des verarbeiteten Materials geachtet wird.

Aus der EP 1 886 793 B1 ist es bekannt, eine in der Spritzgießtechnik bekannte Plastifiziereinheit an einen unter Druck gesetzten Materialspeicher für die Erzeugung einer fluiden Phase eines Materials anzukoppeln. Zur Erzeugung eines Gegenstands auf einem Objektträger in einem Bauraum wird dieses Material über eine Austragsöffnung in Form von Tropfen ausgetragen, wobei aufgrund der Adhäsionskraft des Materials ein hoher Druck und meist auch hohe Temperaturen aufgebracht werden müssen.

Bei dieser Vorrichtung werden die Vorteile der Kunststoffteileherstellung mit serienmäßig erhältlichen, üblicherweise beim Spritzgießen verwendeten Materialien mit den Möglichkeiten des Herstellens von Kunststoffteilen für Stückzahl eins und kleine Losgrößen gepaart. Dadurch können werkzeuglos Teile mit Eigenschaften hergestellt werden, die den von spritzgießgegossenen Teilen ähnlich sind.

Zur Herstellung von derartigen Einzelteilen oder kleinen Losgrößen wie zum Beispiel Musterteilen sind auch weitere Fertigungsverfahren bekannt, die weitläufig unter dem Begriff Prototyping und Rapid Manufacturing bekannt sind. Die Herstellung solcher Teile beruht werkzeuglos, das heißt ohne Formwerkzeuge, in den meisten Fällen auf der Erzeugung der Geometrie aus 3D-Daten. Diese Geometrien werden in unterschiedlichster Form durch entsprechende Mittel wie Aufschmelzen von Pulverschichten durch Wärmeeintrag, zum Beispiel mittels Laser, generative Systeme wie Druckverfahren in unterschiedlich verbindender Form der Pulverteile oder auch in sogenannten Schmelzstrangverfahren hergestellt.

In der Praxis hat sich herausgestellt, dass bei der Herstellung nach dem aus der EP 1 886 793 A1 bekannten Verfahren eine relativ lange Bauzeit für ein Teil benötigt wird. Die im Massedruckerzeuger und somit im gesamten System befindliche aufgeschmolzene Masse wird zwar durch die geometrische Ausführung möglichst gering gehalten, andererseits darf sie nicht zu gering sein, da sonst jede Öffnung der Austrittsöffnung beim Austritt der Tropfen maßgeblich das Druckniveau dynamisch beeinflusst, dem der Massedruckregler mit seiner Trägheit nicht folgen kann. Andererseits hängt die ausgetragene Kunststoffmenge von den Parametern Temperatur, der verflüssigten Masse im Druckerzeuger, dem Druck der Masse, der Austrittsdüsengeometrie sowie von Öffnungszeiten und Hub der Blende der Austrittsöffnung als auch der durch die gesamte Verweilzeit beeinflussten Viskosität des aufgeschmolzenen Materials ab. Zudem nimmt durch die Strukturviskosität des Kunststoffs die Viskosität bei größeren Scherraten ab, was wiederum Einfluss auf die Tropfengröße und deren Neigung zum Verschmelzen mit bereits zuvor ausgebrachten Tropfen hat.

Im Stand der Technik ist auch ein Messverfahren bekannt, bei dem der Masseaustritt pro Zeit aus einer Düse bestimmt wird. Der Wert wird in g / 10 min angegeben, wobei der Kunststoff mittels eines Stößels durch eine Düse mit einem Durchmesser von 2,095 mm gepresst wird. Durch ein Gewichtstück wird die benötigte Kraft aufgebracht. Bei der Angabe der Werte muss immer die Prüftemperatur und die verwendete Nennmasse angegeben werden. Das Verfahren ist gemäß DIN EN ISO 1133 definiert. Bei der Bestimmung des so ermittelten MFI-Werts entsprechend der Melt-Flow-Rate wird die Fließfähigkeit des Kunststoffs nur bei einem definierten Betriebspunkt ermittelt. Die Änderung der Fließfähigkeit bei sich ändernden Prozessparametern im Speziellen in Abhängigkeit der Verweilzeit wird hierbei nicht berücksichtigt.

Ausgehend von diesem Stand der Technik liegt der vorliegenden Erfindung die Aufgabe zugrunde, ein Verfahren zur Erzielung eines konstanten diskontinuierlichen Volumenstroms zur Verfügung zu stellen.

Diese Aufgabe wird durch ein Verfahren mit den Merkmalen des Anspruches 1 gelöst.

Erfindungsgemäß wird die prozessrelative momentane Start-Strukturviskosität zu einem Ausgangspunkt oder Referenzpunkt bestimmt und als Korrekturgröße mittels des Prozessstellgliedes in die Tropfengröße korrigierend eingegriffen. Die Stellgröße ist der Druck im Materialspeicher, wobei als Messgröße vorzugsweise die mittlere Verschiebegeschwindigkeit des den Druck erzeugenden Förderelements pro ausgetragenem Tropfen ermittelt wird und deren Veränderung bei sonst festgehaltenen Prozessparametern als Korrekturregelgröße auf den Druck gegeben wird.

Durch die Regelung können Störeinflüsse bzw. Unterschiede in der generellen Strukturviskosität zum Beispiel durch Schwankungen in den Chargen eines Rohmaterials in Bezug auf einen unabhängig ausgemessenen Modelreferenzpunkt ausgeglichen werden. Ähnliche Störeinflüsse können auch durch die Verweilzeit des Materials im Materialspeicher auftreten.

Vorteilhafterweise wird der Druck durch eine Einspritzschnecke aufgebracht, an dem bzw. an der eine Rückstromsperre als Verschlusselement angebracht ist. Eine derartige Rückstromsperre kann einen Leckfluss aufweisen, der durch einen Korrekturfaktor bei der Kennzahlbestimmung des Regelalgorithmus berücksichtigt werden kann.

Weitere Vorteile ergeben sich aus den Unteransprüchen und der nachfolgenden Beschreibung eines Ausführungsbeispiels.

Im Folgenden wird die Erfindung anhand eines in den Figuren dargestellten Ausführungsbeispiels näher erläutert. Es zeigen:

Fig. 1 ein Ablaufdiagramm zur Bestimmung der Anlagenkennzahl und der anfänglichen Tropfengröße,
Fig. 2 ein Ablaufdiagramm zur Kennzahlregelung für Tropfenkonstanz mittels Stellgröße Druck,
Fig. 3 eine teilweise geschnittene Ansicht einer Vorrichtung zur Herstellung eines dreidimensionalen Gegenstands.

Ausführliche Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

**(Fortsetzung auf ursprünglicher Seite 6)**

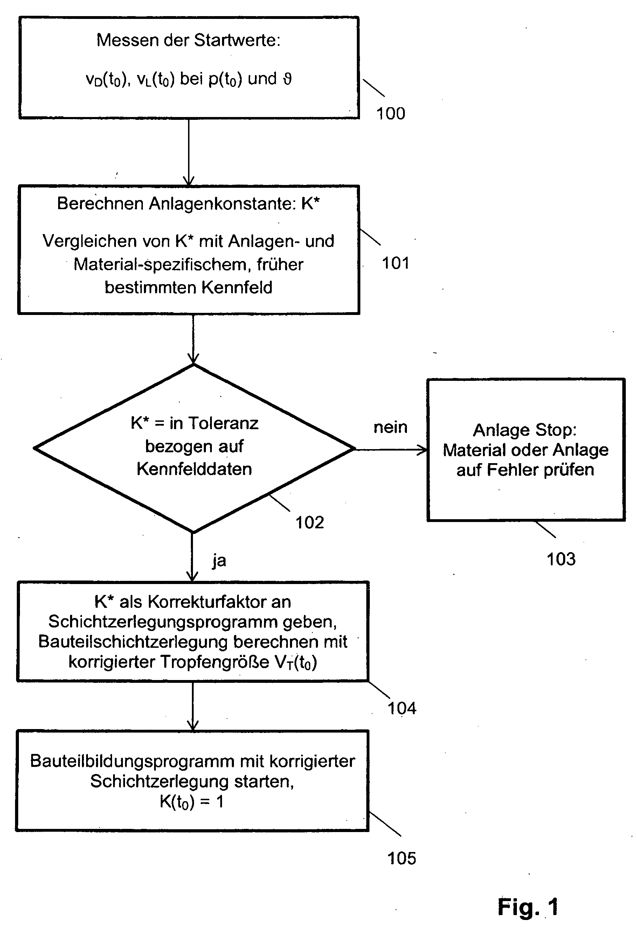

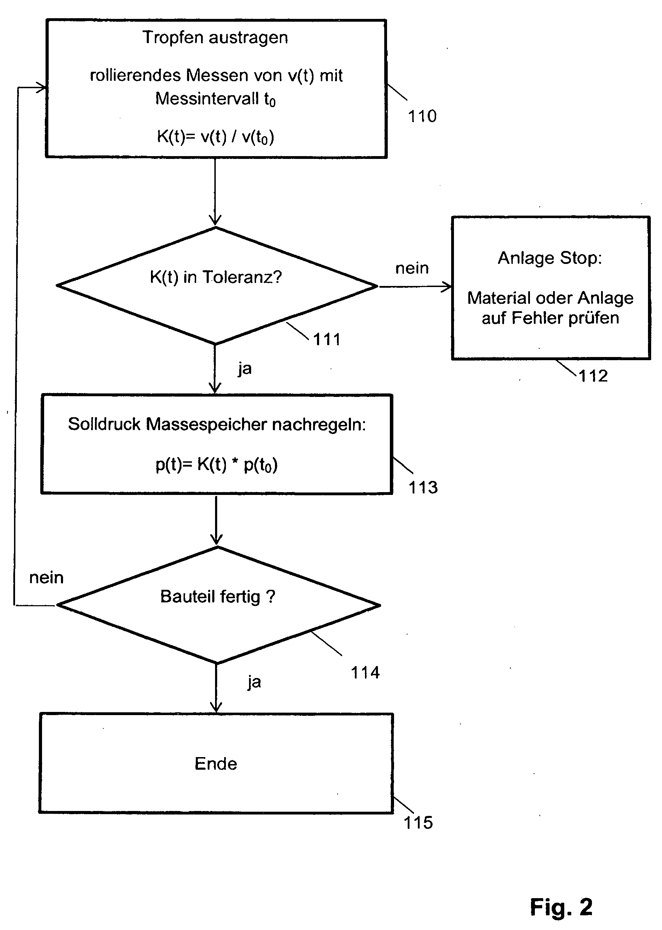

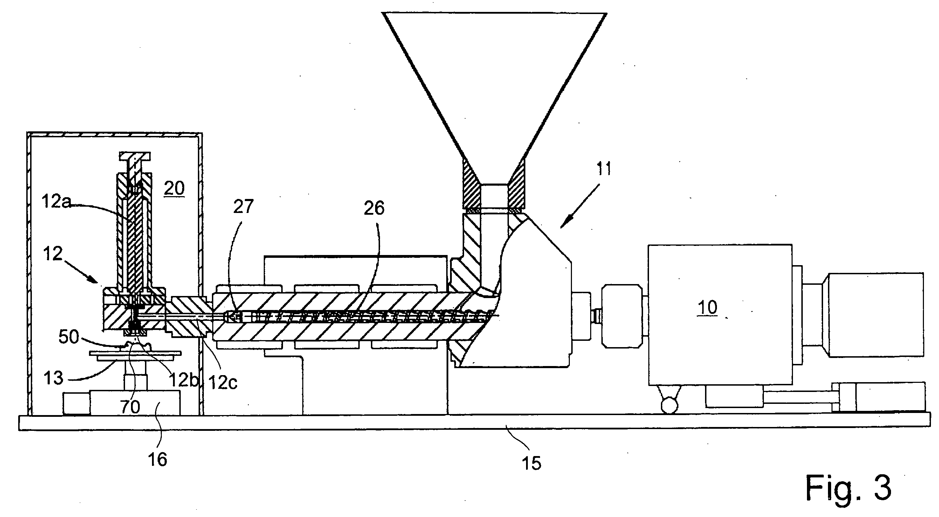

Bevor auf den Verfahrensablauf gemäß Fig. 1 und 2 eingegangen wird, wird zunächst die Vorrichtung zur Herstellung eines dreidimensionalen Gegenstandes 50 oder eines Bauteils aus verfestigbarem Material gemäß Fig. 3 erläutert. Das Material, das entweder im Ausgangszustand in einer fluiden Phase vorliegt oder verflüssigt werden kann, dient zum Herstellen eines dreidimensionalen Gegenstandes 50 durch sequenzielles Austragen von Tropfen 70. Dies kann zum Beispiel dadurch erfolgen, dass einzelne Tropfen 70 sequenziell aus einer Austrittsöffnung 12b einer Austragseinheit 12 ausgetragen werden, sodass sich Schicht für Schicht der Gegenstand 50 auf einem durch eine Antriebseinheit 16 relativ zur Austrittsöffnung 12b beweglichen Objektträger 13 im Bauraum 20 ergibt. Das verfestigbare Material ist ein plastifiziertes Material, wie zum Beispiel Silikon oder ein plastifizierbares Material wie Thermoplaste oder auch pulverförmige Materialien. Bei diesen Materialien kann es sich um die üblicherweise beim Spritzgussverfahren erhältlichen und damit verhältnismäßig günstigen Materialien handeln, da keine speziellen Rapid-Prototyping Materialien erforderlich sind. Das Material kann auch ein unter Wärme reversibel aufschmelzbares und damit recyclebares Material sein. Beliebige andere Materialien können verwendet werden, sofern diese Materialien durch die Vorrichtung plastifizierbar und vor allem durch die wenigstens eine Austragseinheit 12 austragbar sind.

Das Material wird in der auf einem Maschinentisch 15 angeordneten Aufbereitungseinheit 11 plastifiziert bzw. aufbereitet und durch die Druckerzeugungseinheit 10 unter Druck gesetzt. Der Druck p bestimmt wie die Massetemperatur $\vartheta$ oder die Taktzeit $t_B$ oder die Taktbewegung $s_B$ der Austrittsöffnung 12b die Ausbildung der Tropfen 70 und damit die Qualität des herzustellenden Gegenstandes 50. Das gewünschte Volumen des Tropfens 70 liegt insbesondere im Bereich von 0,01 bis 1 mm$^3$. Der Durchmesser der Austrittsöffnung 12b ist insbesondere kleiner gleich 1 mm, vorzugsweise etwa 0,1 mm. Bei einer durchaus üblichen Fördergeschwindigkeit des Förderelements von 100 cm/s, das durch einen sogenannten Punktanguss mit 0,1 mm Durchmesser die Masse fördert, ergibt sich mit Volumenstrom durch Fläche ein Wert von 10.000 m/s. Dies führt in der strukturviskosen Masse zu einem laminaren Quellfluss mit Fließgeschwindigkeiten bis zu 10.000 m/s.

Die im Materialspeicher 12c befindliche fluide Phase des Materials kann über eine Austrittsöffnung 12b, betätigt durch Antriebsteil 12a zum Gegenstand 50 ausgetragen werden. An der Austrittsöffnung 12b kann als Blende vorzugsweise ein Festkörpergelenk gemäß DE 10 2009 030 099 B1 verwendet werden.

Beim verarbeiteten Material handelt es sich im Allgemeinen um sogenannte Nicht-Newton'sche Fluide. Deren Strukturviskosität η ist stark abhängig von beliebigen Prozesseinstellungen wie Temperatur, Druck, Verweilzeit unter Temperatur, Trocknungsgrad des Ausgangsfeststöffes, usw. Der aus den CAD-Modellen berechnete Schichtaufbau eines zu formenden Teils geht jedoch vorzugsweise von einer konstanten Tropfengröße aus. Da jedoch die Strukturviskosität umgekehrt proportional in die Tropfengröße eingeht, ist es notwendig, während der Bauzeit des Gegenstands 50 eine temporäre Veränderung der Strukturviskosität auszugleichen bzw. in Bezug auf Chargenschwankungen auch von Anfang an einzustellen. Hierzu wird folgendes Verfahren eingesetzt.

Um die Ausbringung eines vorzugsweise konstanten diskontinuierlichen Volumenstroms aus aufeinander folgenden Tropfen zu gewährleisten, wird die fluide Phase des Materials in den Materialspeicher 12c eingebracht. Auf die fluide Phase des Materials im Materialspeicher 12c wird ein Druck p aufgebracht. Unter diesem Druck wird das Material in Form der Tropfen 70 aus einer taktbaren Austrittöffnung 12b ausgebracht, um dadurch den dreidimensionalen Gegenstand 50 im Bauraum 20 aufzubauen. Die fluide Phase weist dabei eine Temperatur $\vartheta$ auf.

Um nun den Volumenstrom konstant zu halten, wird der Druck p bei Änderungen der Viskosität der fluiden Phase des Materials unter Beibehaltung der weiteren Prozessparameter geregelt nachgeführt. Zu diesem Zweck werden in Schritt 100 gemäß Fig. 1 die hierfür erforderlichen Parameter gemessen, das heißt der Druck $p(t_0)$, insbesondere das theoretisch berechnete Durchflussvolumen $v_D(t_0)$ durch die Blende, das Leckvolumen $v_L(t_0)$ durch den Sperrring der Rückstromsperre 27 und die Temperatur $\vartheta$ des Materials. Ferner können ergänzend auch die Frequenz f der Anzahl Tropfen pro Sekunde, der Weg s eines Förderelements, die Taktzeit $t_B$ oder Taktbewegung $s_B$ der Austrittsöffnung 12b, die Querschnittsfläche $A_S$ der Aufbereitungseinheit, in der die fördernde Schnecke 26 aufgenommen ist, und der Durchmesser $d_D$ der Austrittsöffnung gemessen werden.

Im Folgenden wird die Regelung des konstanten Tropfenvolumens anhand der Stellgröße des vom Förderelement (Schnecke 26) erzeugten Drucks p beschrieben.

Zum Start-(Referenz) Zeitpunkt

$$t_0 = n_0/f \qquad\qquad\qquad\qquad \text{(Formel 1)}$$

(d.h., $n_0$ Tropfen werden in der Zeit $t_0$ gebildet) der Bauteilerzeugung wird eine Referenzkennzahl als Ersatz für die theoretische Viskosität gebildet, wobei $t_0$ der Zeitpunkt ist, nach dem $n_0$ Tropfen ausgetragen wurden und zu einer späteren Zeit t, die irgendein ganzzahliges Vielfaches des Messintervalls $t_0$ ist:

$$k(t) = \frac{\eta(\vartheta,\rho,t)}{\eta(\vartheta,\rho,t_0)} \qquad\qquad\qquad \text{(Formel 2)}$$

In einer linear genäherten Prozessumgebung verhält sich das gesamte Tropfenvolumen $v_D$ zum Zeitpunkt t unter der Blendenöffnungsfunktion $t_B(t)$ nach dem Hagen-Poiseuille Gesetz:

$$v_D = \text{Düsenkonstante} * \frac{p(t) * t_B(t)}{\eta(\vartheta,\rho,t)} \qquad\qquad \text{(Formel 3)}$$

Da das Tropfenvolumen über den gesamten Bauprozess konstant sein soll, d.h.

$$v_D(t_0) = v_D(t)$$

erhält man aus Formel 3

$$p(t) = p(t_0)\,\frac{t_B(t_0)}{t_B(t)}\,\frac{\eta(\vartheta,\rho,t)}{\eta(\vartheta,\rho,t_0)} \qquad\qquad \text{(Formel 4)}$$

und mit konstanter Blendenöffnungsfunktion $t_B(t) = t_B(t_0)$

$$p(t) \cong k(t) * p(t_0) \qquad\qquad\qquad \text{(Formel 5)}$$

und somit eine direkte Proportionalität zwischen eingestelltem Druck und der sich möglicherweise verändernden relativen Viskositätskennzahl als Beziehung für einen möglichen Tropfenvolumenkonstanzregler.

Andererseits kann man bei idealen Dichtigkeitsverhältnissen der Rückstromsperre auf der Druckerzeugerschnecke das ausgetragene Massevolumen bis zum Zeitpunkt $t_0$ bzw. in dem Zeitintertvall zwischen t und $t-t_0$ mittels Ermittlung der entsprechenden Schneckenverschiebewege messen. Das mittlere Einzeltropfen Volumen $V_T(t)$ ergibt sich durch Division mit der Anzahl $n_0$ ausgetragener Tropfen im entsprechenden Intervall $t_0$:

$$V_{Tropfen,gemessen}(t) = f(p(t)) * \frac{Schneckenweg\,(t) - Schneckenweg\,(t-t_0)}{n_0} * Schneckendurchmesser \qquad (Formel\ 6)$$

Durch die Forderung der Tropfenvolumenkonstanz am Messzeitpunkt $t_0$ und t ergibt sich:

$$f(p(t)) = f(p(t_0)) * \frac{Schneckenweg\,(t_0) - Schneckenweg\,(0)}{Schneckenweg\,(t) - Schneckenweg\,(t-t_0)} \qquad (Formel\ 7)$$

mit der durch Messung der Schneckenverschiebewege errechneten Kennzahl

$$K(t) = \frac{Schneckenweg\,(t_0) - Schneckenweg\,(0)}{Schneckenweg\,(t) - Schneckenweg\,(t-t_0)} \qquad (Formel\ 8)$$

Es hat sich gezeigt, dass obwohl die Funktion f(p(t)) eigentlich über das pVT Kennfeld des verarbeiteten Materials definiert ist, doch der direkte Vergleich der Zusammenhänge zwischen Formel 7 und Formel 5 eine gute Tropfenvolumenkonstanzregelung mittels Nachführung des Drucks durch die gemessene Kennzahl K(t) erlaubt.

Da der Schneckenweg für einen Tropfen sehr klein und in der, realen Anlage weiterhin durch die Leckage des Sperrrings der Rückstromsperre sehr fehlerbehaftet sein kann, sollte $n_0 \geq 10$ bis 100 Tropfen über eine größere Anzahl von Tropfen gemittelt werden. Betrachtet wird also in zeit diskreten $t_0$ Abschnitten die Änderung des Schneckenwegs über eine bestimmte Anzahl $n_0$ von Tropfen.

In einem Massedruckerzeuger mit Schnecke wirkt der Spalt zwischen Zylinderrohr und Sperrring in gleicher Weise als Leckfluss-Blende für die unter Druck gesetzte plastifizierte Masse. Das bedeutet, dass sich die gemessene mittlere Volumenverschiebung v zusammensetzt aus $v_L(t)$ dem Leckfluss über den Sperrring und $v_D(t)$ dem ausgetragenen Volumen durch die Düse:

$$v = v_D + v_L \qquad (Formel\ 9)$$

mit:

$v_D$ = Volumen aus Austragsdüse im Messintervall $t_0$
$v_L$ = Volumen über Rückstromsperre 27 im Messintervall $t_0$

Das Leckvolumen durch den Sperrring verhält sich gleich wie in Formel 3 für die Austragsdüse beschrieben nur mit einer anderen Anlagenkonstante, die abhängig vom Spalt zwischen Zylinderrohr und Sperrring ist.

$$v_L = Anlagenkonstante\ Sperrring * \frac{p\,(t) * t_0}{\eta\,(\vartheta,\rho,t)} \qquad (Formel\ 10)$$

Der Wert des Leckvolumens $v_L(t)$ in einem Messintervall $t_0$ kann jederzeit durch Schließen der Austrittsdüse gemessen werden:

$$v_{L,gemessen}(t) = (Schneckenweg\ (t) - Schneckenweg\ (t-t_0)) * Schneckendurchmesser$$

**(Formel 11)**

Öffnet man die Austrittsöffnung 12b bei gleichbleibendem Zustand, nimmt die Gesamtvolumenänderung am Massedruckerzeuger zu. Man kann das Gesamtvolumen $v(t)$ bei gleichzeitiger Betätigung der Austragsdüse mittels Blendenfunktion $t_B(t)$ wiederum entsprechend Formel 11 messen. Durch das bekannte Leckvolumen $v_L$ und Umstellung der Formel 9 kann auf das Düsenvolumen zur Zeit t im Messintervall $t_0$ durch die Austrittsöffnung zurückgeschlossen werden.

$$v_D = v - v_L \qquad\qquad\qquad \text{(Formel 12)}$$

Das Verhältnis des ausgetragenen Volumens und des Leckvolumens bildet nach Formel 3 und Formel 10 bei konstanter Blendenfunktion $t_B(t)$ eine Anlagenspezifische Konstante:

$$K^* = v_L(t)\ /\ v_D(t) \qquad\qquad\qquad \text{(Formel 13)}$$

In der so in Schritt 101 berechneten Anlagenkonstante $K^*$ sind im Wesentlichen die Geometrie des Leckspalts zwischen Sperrring und Zylinderrohr des Massedruckerzeugers als auch die Auslassgeometrie der Austragsdüse bei konstanter Blendenzeit und Blendenöffnungsweg enthalten. Sie kann mittels Vorversuchen als Kennfeld abhängig von den eingestellten Prozessparametern und dem verwendeten Material bestimmt werden und auch zu jedem Baubeginn neu ermittelt werden, um die Präzision der Schichtzerlegung des Bauteils zu verbessern. Befindet sich $K^*$ im Toleranzbereich bezogen auf diese Kennfelddaten (Abfrage 102) kann $K^*$ als Korrekturfaktor an das Schichtzerlegungsprogramm vor Start des Bauteilprozesses übermittelt werden (Schritt 104) und das Bauteilbildungsprogramm mit korrigierter Schichtzerlegung bzw. Tropfengröße gestartet werden (Schritt 105). Ansonsten wird die Anlage in Schritt 103 gestoppt.

Einsetzen in oben stehende Formel 12 liefert:

$$v_D(t) = v(t)\ /\ (1+ K^*) \qquad\qquad\qquad \text{(Formel 14)}$$

Durch rollierendes Messen im Schritt 110 von $v(t)$ und mit der der Anzahl $n_0 = t_0 * f$ ausgetragener Tropfen im Messintervall kann nun das Tropfenvolumen

$$V_T(t)\ \ = v_D(t)/n_0 = v(t)\ /\ (\ n_0 * (1+ K^*)) \qquad\qquad\qquad \text{(Formel 15)}$$

direkt bestimmt werden und an das Schichtzerlegungsprogramm vor Start des Bauteilprozesses übermittelt werden.

Um die Tropfengröße während des Bauprozesses konstant zu halten, dient, wie in Formel 5 abgeleitet, der Kennzahlregler für die Prozessstellgröße Druck dazu, sich verändernde Viskositäten des Materials durch die Verweilzeit oder kleine Änderungen z.B. in der Verschlussmechanik der Austragsdüse zu kompensieren. Für die Kennzahl $K(t)$ oder alternativ für den Druck $p(t)$ kann ein maximales Prozessfenster definiert werden (Abfrage 111), bei dessen Überschreiten ein Anlagendefekt detektiert wird (z.B. verstopfte Austragsblende oder Leckage zwischen Materialspeicher 12c und Austragsblende an der Austrittsöffnung 12b) und die Anlage gemäß Schritt 1,12 gestoppt wird.

Ansonsten wird der Druck in Schritt 113 bedarfsweise nachgeregelt, bis das Bauteil fertig ist (Abfrage 114, Schritt 115).

Beispiel für die Anlagenkennzahl $K^*$ und initiale Tropfengröße $V_T(t_0)$:

Bei einer realisierten Vorrichtung ergab sich bei einem Austragsdüsendurchmesser von 0,15 [mm], einer Schnecke mit Durchmesser 15 [mm] bei einem Druck von 400 [bar] im Massedruckerzeuger, einer Tropfenfrequenz von 90 [Hz] und einer Blendenzeit von $t_B(t) = 0,5 * t_0$ bei einer Messzeit von $t_0 = 77[s]$ ein $K^* = 0,014$ und eine Tropfengröße $V_T(t_0) = 0,020$ [mm$^3$], was experimentell sehr gut bestätigt werden konnte.

Grundsätzlich gelten die erläuterten Beziehungen zur relativen Viskositätsmessung linear nur im Bereich eines bestimmten Arbeitspunkts. Daher empfiehlt es sich, entsprechende Kennfelder abhängig von den eingestellten Prozessparametern und dem verwendeten Material vorab zu bestimmen und in einer Datenbank zu hinterlegen.

**Bezugszeichenliste**

| | |
|---|---|
| 10 | Druckerzeugungseinheit |
| 11 | Aufbereitungseinheit |
| 12 | Austragseinheit |
| 12a | Antriebsteil |
| 12b | Austrittsöffnung |
| 12c | Materialspeicher |
| 13 | Objektträger |
| 15 | Maschinentisch |
| 16 | Antriebseinheit |
| 20 | Bauraum |
| 26 | Schnecke |
| 27 | Rückstromsperre |
| 50 | Gegenstand |
| 70 | Tropfen |
| 100-115 | Ablaufschritte |

**Patentansprüche**

1. Verfahren zur Ausbringung eines Volumenstroms aus aufeinander folgenden Tropfen (70) zur Herstellung eines dreidimensionalen Gegenstandes (50) aus verfestigbarem Material, das entweder im Ausgangszustand in einer fluiden Phase vorliegt oder in eine fluide Phase verflüssigt werden kann, mit den Schritten

    - Einbringen der fluiden Phase des Materials in einen Materialspeicher (12c),
    - Erzeugen eines Drucks (p) auf die fluide Phase des Materials im Materialspeicher (12c),
    - tropfenförmiges Ausbringen des Materials aus einer taktbaren Austrittsöffnung (12b) zum Aufbau des dreidimensionalen Gegenstandes (50) in einem Bauraum (20)
    - wobei die fluide Phase des Materials eine Temperatur ($\vartheta$) abhängige Viskosität aufweist,
    - wobei wenigstens ein Prozessparameter während der Herstellung des dreidimensionalen Gegenstandes (50) unter Beibehalten der weiteren Prozessparameter geregelt zur Anpassung der Tropfengröße nachgeführt wird,

    **dadurch gekennzeichnet, dass** eine Änderung der Viskosität der fluiden Phase des Materials kontinuierlich erfasst wird und dass bei Änderung der Viskosität der Druck (p) im Materialspeicher (12c) als der wenigstens eine Prozessparameter bei Änderung der Viskosität der fluiden Phase des Materials unter Beibehalten der weiteren Prozessparameter mittels eines Regelkreises geregelt zum Erhalt einer vorbestimmten Tropfengröße nachgeführt wird, wobei der Druck (p) durch ein Förderelement aufgebracht wird, wobei die mittlere Verschiebegeschwindigkeit des Förderelements pro ausgetragenem Tropfen (70) als Messgröße in die Stellgröße des Regelkreises umgerechnet wird.

2. Verfahren nach Anspruch 1, **dadurch gekennzeichnet, dass** die Messgröße zur geregelten Nachführung des konstanten Tropfenvolumens dynamisch in einem rollierenden Verfahren bestimmt wird.

3. Verfahren nach Anspruch 1 oder 2, **dadurch gekennzeichnet, dass** das Förderelement eine die fluide Phase des Materials in den Materialspeicher (12) fördernde Schnecke (26) ist.

4. Verfahren nach einem der vorhergehenden Ansprüche, **dadurch gekennzeichnet, dass** das Förderelement eine Rückstromsperre (27) mit einem Leckfluss aufweist, der in der Regelung durch Bestimmung eines Korrekturfaktors (k*) berücksichtigt wird.

5. Verfahren nach einem der vorhergehenden Ansprüche, **dadurch gekennzeichnet, dass** der Regler ein Proportionalregler ist und eine Kennzahl mittels eines Proportionalregelalgorithmus nachgeführt wird.

6. Verfahren nach einem der vorhergehenden Ansprüche, **dadurch gekennzeichnet, dass** beim Erfassen der Messgröße Anlagen- und Material-spezifische Grenzwerte vorgegeben oder vorberechnet werden, bei deren Überschreiten ein Anlagendefekt detektiert wird.

**Claims**

1. A method for discharging a volume flow consisting of successive drops (70) to produce a three-dimensional object (50) of solidifiable material, which is either in a fluid phase at the outset or is liquefiable to yield a fluid phase, comprising the steps

   - introducing the fluid phase of the material into a material storage means (12c),
   - generating a pressure (p) on the fluid phase of the material in the material storage means (12c),
   - dropwise discharging the material from a cyclable outlet opening (12b) to build up the three-dimensional object (50) in a construction chamber (20),
   - wherein the fluid phase of the material has a viscosity dependent on temperature ($\theta$),
   - wherein at least one process parameter is tracked during the production of the three-dimensional object while maintaining the other process parameters, to adapt the drop size,

   **characterized in that** a change in viscosity of the fluid phase of the solidifiable material is continuously detected, and that the pressure (p) in the material storage means (12c) is tracked as the at least one process parameter via a closed-loop control in the event of a change in the viscosity of the fluid phase of the material, while maintaining the other process parameters, to achieve a predetermined drop size, wherein the pressure (p) is applied by a conveying element, the average displacement velocity of the conveying element per discharged drop (70) being converted as a measured variable into the control variable for the control loop.

2. A method according to claim 1, **characterized in that** the measured variable for the tracking of the constant drop volume is determined dynamically by a rolling method.

3. A method according to claim 1 or 2, **characterized in that** the conveying element is a screw (26) conveying the fluid phase of the material into the material storage means (12).

4. A method according to one of the preceding claims, **characterized in that** the conveying element comprises a non-return valve (27) with a leakage flow, which is taken into account in the control system by determining a correction factor (k*).

5. A method according to any one of the preceding claims, **characterized in that** the closed-loop controller is a proportional controller and a characteristic value is corrected by means of a proportional control algorithm.

6. A method according to any one of the preceding claims, **characterized in that**, on detecting of the measured variable, system- and material-specific limit values are predetermined or precalculated, a system defect being detected if they are exceeded.

**Revendications**

1. Procédé pour produire un débit volumétrique à partir de gouttes (70) se succédant, pour la fabrication d'un objet tridimensionnel (50) en matériau durcissable, se présentant à l'état initial sous la forme d'une phase fluide ou pouvant être liquéfié en une phase fluide, comportant les étapes suivantes :

   - introduction de la phase fluide du matériau dans un réservoir de matériau (12c),
   - production d'une pression (p) sur la phase fluide du matériau dans le réservoir de matériau (12c),
   - délivrance du matériau sous forme de gouttes par un orifice de sortie cadençable (12b) pour la construction de l'objet tridimensionnel (50) dans un espace de construction (20) ;
   - la phase fluide du matériau présentant une viscosité dépendant de la température ($\theta$) ;
   - au moins un paramètre du procédé étant asservi durant la fabrication de l'objet tridimensionnel (50) en maintenant les autres paramètres du procédé par réglage en vue d'une adaptation de la taille des gouttes,

8

**caractérisé en ce que** la modification de la viscosité de la phase fluide du matériau est prise en compte en continu et **en ce que**, lors d'une modification de la viscosité, la pression (p) dans le réservoir de matériau (12c) est asservie, en tant que paramètre de procédé, lors de la modification de la viscosité de la phase fluide du matériau en conservant les autres paramètres de procédé au moyen d'un circuit de réglage, par réglage en vue de l'obtention d'une taille de gouttes prédéterminée, la pression (p) étant appliquée par un élément d'alimentation, la vitesse moyenne de déplacement de l'élément d'alimentation par goutte distribuée (70) étant convertie en tant que grandeur de mesure dans la grandeur de commande du circuit de réglage.

**2.** Procédé selon la revendication 1, **caractérisé en ce que** la grandeur de mesure est déterminée dynamiquement dans un procédé continu pour l'asservissement par réglage du volume constant des gouttes.

**3.** Procédé selon la revendication 1 ou 2, **caractérisé en ce que** l'élément d'alimentation est une vis sans fin (26) amenant la phase fluide du matériau dans le réservoir de matériau (12).

**4.** Procédé selon l'une quelconque des revendications précédentes, **caractérisé en ce que** l'élément d'alimentation présente un clapet anti-retour (27) avec échappement, qui est pris en compte lors du réglage par détermination d'un facteur de correction (k*).

**5.** Procédé selon l'une quelconque des revendications précédentes, **caractérisé en ce que** le régulateur est régulateur proportionnel et une caractéristique est asservie au moyen d'un algorithme de réglage proportionnel.

**6.** Procédé selon l'une des revendications précédentes, **caractérisé en ce que** lors de la prise en compte de la grandeur de mesurée, des valeurs limites spécifiques à l'appareillage et au matériau sont prédéterminées et préalablement calculées, un défaut d'appareillage étant détecté lors de leur dépassement.

Messen der Startwerte:

$v_D(t_0)$, $v_L(t_0)$ bei $p(t_0)$ und $\vartheta$

100

Berechnen Anlagenkonstante: K*

Vergleichen von K* mit Anlagen- und Material-spezifischem, früher bestimmten Kennfeld

101

K* = in Toleranz bezogen auf Kennfelddaten

102

nein

Anlage Stop: Material oder Anlage auf Fehler prüfen

103

ja

K* als Korrekturfaktor an Schichtzerlegungsprogramm geben, Bauteilschichtzerlegung berechnen mit korrigierter Tropfengröße $V_T(t_0)$

104

Bauteilbildungsprogramm mit korrigierter Schichtzerlegung starten, $K(t_0) = 1$

105

**Fig. 1**

Tropfen austragen

rollierendes Messen von v(t) mit Messintervall $t_0$

$K(t) = v(t) / v(t_0)$

— 110

K(t) in Toleranz? — 111

nein →

Anlage Stop:

Material oder Anlage auf Fehler prüfen

— 112

ja

Solldruck Massespeicher nachregeln:

$p(t) = K(t) * p(t_0)$

— 113

nein

Bauteil fertig ?

— 114

ja

Ende

— 115

**Fig. 2**

Fig. 3

EP 2 825 384 B1

**EP 2 825 384 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2266782 A1
- DE 102004025374 A1
- EP 1886793 B1
- EP 1886793 A1
- DE 102009030099 B1